## Europäisches Patentamt
## European Patent Office
## Office européen des brevets

(19)

(11) Veröffentlichungsnummer: **0 258 324**
**B1**

(12)

# EUROPÄISCHE PATENTSCHRIFT

(45) Veröffentlichungstag der Patentschrift: **13.06.90**

(51) Int. Cl.⁵: **E 03 F 3/06**, F 16 L 55/16

(21) Anmeldenummer: **87901315.9**

(22) Anmeldetag: **02.03.87**

(86) Internationale Anmeldenummer:
**PCT/AT87/00014**

(87) Internationale Veröffentlichungsnummer:
**WO 87/05365 11.09.87 Gazette 87/20**

(54) **VERFAHREN ZUR WIEDERHERSTELLUNG VON EINSTURZGEFÄHRDETEN KANÄLEN, INSBESONDERE PROFILKANÄLEN.**

(30) Priorität: **03.03.86 AT 547/86**

(43) Veröffentlichungstag der Anmeldung:
**09.03.88 Patentblatt 88/10**

(45) Bekanntmachung des Hinweises auf die
Patenterteilung:
**13.06.90 Patentblatt 90/24**

(84) Benannte Vertragsstaaten:
**AT BE CH DE FR GB IT LI LU NL SE**

(56) Entgegenhaltungen:
**EP-A-0 110 664**
**EP-A-0 146 331**
**GB-A-2 079 805**
**GB-A-2 081 281**
**GB-A-2 139 938**
**GB-A-2 167 796**

(73) Patentinhaber: **ALLGEMEINE
BAUGESELLSCHAFT - A. PORR
AKTIENGESELLSCHAFT
Rennweg 12
A-1031 Wien (AT)**

(72) Erfinder: **HAYDEN, Rudolf
Eben 395
A-4813 Altmünster (AT)**

(74) Vertreter: **Pfeifer, Otto, Dipl.-Ing. et al
Patentanwälte Dipl.-Ing. Dr. techn. Schütz,
Alfred Dr. phil. Mrazek, Engelbert Dipl.-Ing.
Holzer, Walter Dipl.-Ing. Pfeifer, Otto
Fleischmanngasse 9
A-1040 Wien (AT)**

Courier Press, Leamington Spa, England.

## Beschreibung

Die vorliegende Erfindung bezieht sich auf ein Verfahren zur Wiederherstellung von einsturzgefährdeten Kanälen, insbesondere Profilkanälen, wobei erfindungsgemäß die Technik der Bodenvermörtelung angewendet wird.

Seit Jahren und Jarhzehnten liegen viele Tausende Kilometer Kanäle unbemerkt unter vielbefahrenen Verkehrsflächen. Der Zustand dieser unterirdischen Lebensadern verlangtinzwischen auf weite Strecken hin dringend nach Sanierung oder Erneuerung. Allein im Bereich der Bundeshauptstadt Wien sind es rund 450 Kilometer Profilkanäle, die nach Annsicht von Fachleuten undicht oder einsturzgefährdet sind. Die übliche Wiederherstellung würde jedoch zusätzliche Aufgrabungen in einem unzumutbaren Ausmaß verursachen, so daß Baumethoden entwickelt werden müssen, die es gestatten, alle Arbeiten ohne wesentliche Beeinträchtigung des "oberirdischen Lebens" durchführen zu können.

Hinsichtlich der Schadensursachen und des Schadensbildes bei Kanälen ist davon auszugehen, daß auf jeden Kanal Belastungen einwirken, sowohl von außen als auch von innen. Von außen sind es Erdauflast, Verkehrslasten, mitunter seitlicher Erddruck durch Bodenverschiebungen infolge Aufgrabungen oder Explosionen (Bombenkrieg) im benachbarten Bereich, Setzungen und anderes mehr. Von innen her wirken Abreib an der Sohle durch Geschiebe, ferner Korrosion verschiedenster Art durch aggressive Abwässer und Dämpfe. Das Zusammenwirken dieser Faktoren — fallweise unterstützt durch Mängel in Planung und Aufführung — führt dazu, daß der Kanal fortschreitend schadhaft wird, Reparaturen bedarf und schließlich erneuert werden muß. Sehr häufig bietet sich heute ein völlig verändertes Bild der Belastungen gegenüber den seinerzeitigen Verhältnissen bei Errichtung des Bauwerkes. Obwohl an vielen Stellen der Kanalnetze laufend Erhaltungsarbeiten durchgeführt werden, ist eine Überalterung weiter Bereiche eingetreten. Untersucht man den Kanalbestand auf seinen Zustand hin bzw. auf sichtbare Schäen, so ergibt sich ein uneinheitliches und vielfältiges Schadensbild: Risse und Sprünge in den Wandungen, teilweiser bis völliger Abrieb der Sohle, Gefügeauflösung im Mauerwerk, Veränderungen der Gefällsverhältnisse infolge Setzungen, schadhafte Einmündungen und Schachtanschlüsse, Verformungen des Profils usw. Bohrkernentnahmen geben Aufschluß über den Gesamtquerschnitt der Wand und gestatten Rückschlüsse auf die Standfestigkeit des Kanals, sofern diese nicht schon aus dem äußeren Schadensbild erkennbar ist.

Bei einem derart schadhaften Kanal stellt sich dann die Frage einer Sanierung oder einer Erneuerung. Während eine Sanierung in der Regel nur für einen beschränkten Zeitraum Abhilfe schafft, muß die Erneuerung oder Wiederherstellung auf viele Jahrzehnte hinaus die volle Funktionsfähigkeit des Kanals sicherstellen. Dementsprechend verhalten sich auch die Kosten, die für die jeweilige Baumaßnahmen zu veranschlagen sind.

Ziel jeder Kanalsanierung muß sein, die Standfestigkeit des Kanals und seine Widerstandsfestigkeit gegenüber chemischen Angriffen wiederherzustellen. Die Maßnahmen richten sich notwendigerweise nach Form und Größe des Kanalquerschnitts. Es ist davon auszugehen, ob freier Arbeitsraum im Profil zur Verfügung steht oder ob von Schächten aus Geräte eingesetzt werden müssen, ob der gegebene Kanalquerschnitt erhalten oder verößert werden muß oder ob eine Verminderung desselben toleriert werden kann. Schadensursachen und Schadensbild ergänzen die technischen Parameter, so daß schließlich unter Einbeziehung wirtschaftlicher Überlegungen die Entscheidung zugunsten eines bestimmten Sanierungsverfahrens sehr schwierig werden kann.

Ist eine geringfügige Verkleinerung des Profils zulässig und ausreichend Arbeitsraum vorhanden, kann mit (Zement-)Injektionen das umhüllende Erdreich verfestigt und die Standsicherheit verbessert werden; die Kanalwände setzt man mittels Sanierungsprodukten (zumeist auf Zement-Kunststoffbasis) instand. Die hiefür notwendige Reiknigung der Kanal-Innenfläche wird freilich durch eine meist verfestigte Sielhaut sehr erschwert. Sie vermindert oder verhindert die Haftung der aufgebrachten Sanierungsschichten. Dies trifft auch für dünne Spritzbetonschalen zu. Es ist daher notwendig, diese zu armieren und möglichst zu einem selbsttragenden Rohr auszubilden.

Bei kleineren — schliefbaren — Profilen wird mittels einer Innenschalung aus Stahl oder in Form eines Schlauches gleichfalls ein Rohr hergestellt, dessen Sohle aus vorgefertigten Kunstharzbetonschalen bestehen kann. Bei Kreisprofilen können dünnwandige Kunststoffrohre (z.B. PVC, PE) eingezogen werden, der verbleibende Zwischenraum zum Altkanal wird mit Zementsuspension ausgepreßt.

Schwierigkeiten bereiten bei diesen Verfahren Einmündungen von Hausanschlüssen, so weit diese nicht in Schächte eingeführt werden.

Schließlich seien hier noch Verfahren angeführt, die mit Fertigteilen aus Kunststoff, GFK oder Faserbeton ein neues Profil an Ort und Stelle herstellen. Sie erfordern entsprechenden Arbeitsraum und eignen sich daher nur für größere Querschnitte.

Die Erneuerung eines Kanals kann aber auch mit der Forderung verbunden sein, die Abflußleistung zu erhöhen, den Querschnitt zu erweitern. Hiezu bietet sich das Rohr-Vorpreßverfahren an, das von einem Schacht aus Vortriebsarbeiten in zwei Richtungen gestattet, so daß für 200 bis 300 Laufmeter Kanal ein Schacht notwendig ist. Das Verfahren ist an den Kreisquerschnitt gebunden, die Rohre werden über den bestehenden Kanal geschoben, der schrittweise abgebaut wird. Der hohe technische Aufwand bedingt hohe Kosten, so daß diese Methode auf Sonderfälle beschränkt bleiben muß.

Besondere Aufmerksamkeit verdienen Sanierungsverfahren der modernen Kunststofftechnik. Ihre Wirkungsweise beruht auf der (mechanischen) herstellugn eines Rohres im vorhandenen Profil. Die Rohre sind selbsttragend und kunstharzegebunden. So weit bekannt ist, befindet sich diese Technik gegenwärtig erst im Zustand der Erprobung.

Zusammenfassend muß festgestellt werden, daß alle bisher bekannten und angewendeten Verfahren zur Sanierung beschädigter Kanäle nur in einzelnen Teilebreichen einsetzbar sind, wenn die Schäden nicht zu groß sind. Sie sind in der Regel mit unverhältnismäßig hohen Kostenn verbunden und bieten nur in Einzelfällen eine dauerhafte Verbesserung.

Es besteht somit nach wie vor ein Bedarf nach einem möglichst universell einsetzbaren Verfahren zur Sanierung beschädigter Kanäle, das unter weitestgehender Aufrechterhaltung des Kanalbetriebes, bei nur geringer Belästigung der Anrainer und nur kurzfristiger Behinderung des Straßenverkehrs eine wirtschaftliche und dauerhafte Erneuerung von schadhaften Abwasserleitungen ermöglicht.

Es hat sich nun gezeigt, daß dieses Ziel durch das erfindungsgemäße Verfahren zur Wiederherstellung von schadhaften begehbaren, schliefbaren und nichtschliefbaren Kanälen beliebiger Querschnittsform erreicht werden kann, das sich dadurch auszeichnet, daß in den schadhaften Kanal eine an sich bekannte dichte Innenschalung eingeführt wird, sodann die schadhaften Kanalwandteile über eine abgeteufte Bohrung von außen mit Hilfe eines Schneidstrahles aus Wasser oder Suspension mit oder ohne Luftzusatz aufgelockert und/oder entfernt werden und der dadurch entstehende oder schon vorhandene Hohlraum mit Mörtel und/oder Suspension ausgefüllt und verfestigt wird.

Für Mörtel bzw. Suspension werden vorteilhaft entweder thermoplastische, elastomere oder duromere organische Bindemittel herangezogen oder hydraulische Bindemittel wie Portlandzement, Eisenportland- und Hochofenzement, Zement mit erhöhter Sulfatbeständigkeit, Kalk, Schnellzement auf Basis 11 $CaO.7Al_2O_3.CaF_2$ und Tonerdezement. In vorteilhafter weiterer Ausgestaltung des erfindungsgemäßen Verfahrens können zur Anpassung der Erstarrungszeit des Zementes an die gegebenen Bedingungen entsprechende Zusätze verwendet werden. Die Zugabe eines Fließmittels, eines Verflüssigers, eines Luftporenmittels und/oder eines Stabilisators kann zu weiteren notwendigen Verbesserungen und modifizierungen führen.

Eine Verbesserung der Penetrationsfähigkeit und/oder Beständigkeit des Mörtels und/oder der Suspension wird durch Zugabe von Kunststoffzusätzen, vorzugsweise auf Acrylat- und/oder Styrolbutadienbasis, erreicht.

Nach einer bevorzugten Variante des Verfahrens dient als Innenschalung eine Stahlschalung, vorzugsweise eine zerlegbare Stahlschalung. Sie wird vorteilhafterweise auf vorgefertigte Sohlschalen versetzt. Zug um Zug mit dem Zusammenbau der Schalung können zweckmäßigerweise Auskleidungselemente für den neuen Kanal um die Schalung montiert werden.

Nach Maßgabe der Erfordernisse können entlang der Segmentstöße der in den Kanal eingeführten Schalung Reihen von hydraulischen Pressen derart angeordnet werden, daß durch ihre Betätigung die Schalung erweitert, an die Kanalwand gepreßt und das Gefüge der Kanalwand aufgelockert und/oder zerstört wird.

Der Arbeitsablauf nach dem erfindungsgemäßen Verfahren kann sich beispielsweise wie folgt gestalten:

Um die entsprechenden Arbeiten am Kanal ausführen zu können, muß im bestehenden Kanalprofil eine verschleißfeste und steife Schalung montiert werden, die nicht nur den Kanal während der Hochdruck-, Spül- und Injektionsarbeiten stützt, sondern auch dem neu aufgebauten Konsolidierungskörper um den Kanal ein glattes Innenprofil verleiht. Zur provisorischen Überleitung der gefällsaufwärts in den zu sanierenden Kanal eingeleiteten Abwässer wird ein Rohr in der Schalung montiert.

Den Bodenverhältnissen angepaßt wird nach dem Bohrverfahren auf die erforderliche Tiefe abgeteuft. Der Bohrkopf am unteren Ende des Bohrgestänges trägt ein Spezialventil, in dem sich orthogonal zur Bohrachse eine oder mehrere Düsen befinden. Mi Hilfe eines Schneidstrahles aus Wasser oder Suspension mit oder ohne Luftzusatz werden der anstehende Boden und die schadhaften Kanalwandteile sowie die mitunter sehr feste Sielhaut aufgeschnitten und ausgespült. Der Pumpendruck wird so eingestellt, daß dieser Vorgang in ausreichendem Maße ausgeführt werden kann. In Abhängigkeit von der Beschaffenheit des Bodens und der Kanalwand kann hiebei ein Pumpendruck von 5 bis 1000 bar, vorzugsweise von 25 bis 800 bar, insbesondere von 100 bis 500 bar angewendet werden. Unter besonders erschwerten Bedingungen kann ein Pumpendruck von sogar bis zu 1300 bar erforderlich werden.

Das Auflockern und/oder Entfernen der die Innenschalung umgebenden Kanalwandbauteile und/oder Bodenbereiche kann mit Hilfe von in der Bauwirtschaft üblichen Hochdruckinjektionsanlagen, wie z.B. "Soilcrete Jet Grouting"/GKN Keller oder "Grout Jetting"/Hörlesberger vorgenommen werden.

Während des Rückzuges des Bohrkopfes wird die Suspension bzw. der Mörtel mit Hochdruck durch das Bohrgestänge injiziert.

Durch Richten des Injektionsstrahles während einer bestimmten Zeit in eine bestimmte Richtung ist es möglich, Form und Dimension der Vermörtelung festzulegen. Der ausgespülte Boden wird durch die Zementsuspension ersetzt, die sich mit dem gelösten Boden intensiv zu einem homogenen Bodenmörtel vermischt. Dies ist umso leichter zu erreichen, als der Bereich der Spülung und Verfestigung vorwiegend in der seinerzeitigen Hinterfüllungszone des Kanals liegt.

Das erfindungsgemäße Verfahren weist gegenüber den bisher bgekannten Verfahren zur Sanierung schadhafter Kanäle vor allem den Vorteil auf, das es universell anwendbar ist und keine technischen Schwierigkeiten aufwirft. Es zeichnet sich durch eine besondere Wirtschaftlichkeit und hohe Umweltfreundlichkeit aus, da ausschließlich umweltschonendes Material eingesetzt wird. Die Lärmentwicklung ist auf ein Minimum reduziert, da alle maschinellen Anlagen in lärmgedämpften Containern untergebracht werden. Hinzu kommt, daß die Bauarbeiten gegebenenfalls auf die Nachtstunden beschränkt werden können un auch bei beengten Platzverhältnissen nicht zu einer Beeinträchtigung der umliegenden Wirtschaft führen.

**Patentansprüche**

1. Verfahren zur Wiederherstellung von schadhaften begehbaren, schliefbaren und nichtschliefbaren Kanälen beliebiger Querschnittsform, dadurch gekennzeichnet, daß in den schadhaften Kanal eine au sich bekannte dichte Innenschalung eingeführt wird, sodann die schadhaften Kanalwandteile über eine abgeteufte Bohrung von außen mit Hilfe eines Schneidstrahles aus Wasser oder Suspension mit oder ohne Luftzusatz augelockert und/oder entfernt werden und der dadurch entstehende oder schon vorhandene Hohlraum mit Mörtel und/oder Suspension ausgefüllt und verfeßtigt wird.

2. Verfahren nach Anspruch 1, dadurch gekennzeichnet, daß die Ausfüllung des entstandenen oder schon vorhandenen Hohlraumes mit hydraulisch erhärtendem Mörtel, vorzugsweise mit Mörtel auf Basis eines Portlandzementes, Eisenportlandzementes, Hochofenzementes, insbesondere eines Zementes mit erhöhter Sulfatbeständigkeit, oder eines hydraulisch erhärtenden Kalkes durchgeführt wird.

3. Verfahren nach Anspruch 1, dadurch gekennzeichnet, daß die Ausfüllung des entstandenen oder schon vorhandenen Hohlraumes mit Schnellzement auf Basis von $11CaO.7 Al_2O_3.CaF_2$ oder Tonerdezement durchgeführt wird.

4. Verfahren nach Anspruch 1, dadurch gekennzeichnet, daß die Ausfüllung des entstandenen oder schon vorhandenen Hohlraumes mit einem thermoplastischen, elastomeren oder duromeren organischen Bindemittel durchgeführt wird.

5. Verfahren nach einem der Ansprüche 1 bis 3, dadurch gekennzeichnet, daß der Mörtel oder die Suspension einen die Erstarrungszeit des Zementes den gegebenen Bedingungen anpassenden Zusatz enthält.

6. Verfahren nach einem der Ansprüche 1 bis 3 oder 5, dadurch gekennzeichnet, daß der zur Verfestigung und/oder Ausfüllung des entstandenen oder schon vorhandenen Hohlraumes eingesetzte Mörtel bzw. die Suspension ein Fließmittel, einen Verflüssiger, ein Luftporenmittel und/oder einen Stabilisator enthält.

7. Verfahren nach einem der Ansprüche 1 bis 3, 5 oder 6, dadurch gekennzeichnet, daß dem hydraulisch erhärtenden Mörtel bzw. der Suspension zur Verbesserung der Penetrationsfähigkeit und/oder Beständigkeit ein Kunststoffzusatz, vorzugsweise auf Acrylat- und/oder Styrolbutadienbasis, zugegeben wird.

8. Verfahren nach einem der Ansprüche 1 bis 7, dadurch gekennzeichnet, daß die Auflockerung und/oder die Entfernung der schadhaften Kanalwandteile mit Hilfe eines Schneidstrahles in Abhängigkeit von der Beschaffenheit des Bodens und der Kanalwand mit einem Pumpendruck von 5 bis 1000 bar, vorzugsweise von 25 bis 800 bar, insbesondere von 100 bis 500 bar, durchgeführt wird.

9. Verfahren nach einem der Ansprüche 1 bis 8, dadurch gekennzeichnet, daß als Innenschalung eine Stahlschalung, vorzugsweise eine zerlegbare Stahlschalung, eingesetzt wird.

10. Verfahren nach einem der Ansprüche 1 bis 9, dadurch gekennzeichnet, daß die Schalung auf vorgefertigte Sohlschalen versetzt wird.

11. Verfahren nach einem der Ansprüche 1 bis 10, dadurch gekennzeichnet, daß Zug um Zug mit dem Zusammenbau der Schalung Auskleidungselemente für denn neuen Kanal um die Schalung versetzt werden.

12. Verfahren nach einem der Ansprüche 1 bis 9, dadurch gekennzeichnet, daß entlang der Segmentstöße der in den Kanal eingeführten Schalung Reihen von hydraulischen Pressen derart angeordnet werden, daß durch ihre Betätigung die Schalung erweitert, an die Kanalwand gepreßt und das Gefüge der Kanalwand aufgelockert und/oder zerstört wird.

**Revendications**

1. Procédé de rénovation de canalisations défectueses de n'importe quelle section et du type visitable, semi-visitable ou non visitable, caractérisé en ce qu'on introduit, dans la canalisation défectueuse, une chemise intérieure étanche bien connue, puis on désagrège les parties de canalisation défectueuses de l'extérieur, par l'intermédiaire d'un trou foré, à l'aide d'un jet coupant d'eau ou de suspension avec ou sans apport d'air et/ou on les évacue, puis on remplit et on bétonne le vide ainsi formé ou déjà présent au moyen de mortier et/ou de suspension.

2. Procédé suivant la revendication 1, caractérisé en ce que le remplissage du vide ainsi formé ou déjà présent s'effectue au moyen de mortier à durcissement hydraulique, de préférence au moyen de mortier à base de ciment Portland, de ciment de laitier, de ciment de haut-fourneau, en particulier d'un ciment à resistance aux sulfates accrue, ou de chaux hydraulique.

3. Procédé suivant la revendication 1, caractérisé en ce que le remplissage du vide ainsi formé ou déjà présent s'effectue à l'aide de ciment rapide à base de $11CaO.7 Al_2O_3.CaF_2$ ou de ciment alumineux.

4. Procédé suivant la revendication 1, caractérisé en ce que le remplissage du vide ainsi formé ou déjà présent s'effectue au moyen d'un liant organique thermoplastique, élatomère ou thermodurcissable.

5. Procédé suivant l'une quelconque des revendications 1 à 3, caractérisé en ce que le mortier ou la suspension contient un additif qui adapte le temps de durcissement du ciment aux conditions données.

6. Procédé suivant l'une quelconque des revendications 1 à 3 ou 5, caractérisé enn ce que le mortier ou la suspension utilisé pour le bétonnage et/ou le remplissage du vide ainsi formé ou déjà présent contient un solvant, un plastifiant-réducteur d'eau, un entraîneur d'air et/ou un agent stabilisant.

7. Procédé suivant l'une quelconque des revendications 1 à 3, 5 ou 6, caractérisé en ce qu'un adjuvant en matière plastique, de préférence à brase d'acrylate et/ou de styrène-butadiène, es ajouté au mortier à durcissement hydraulique ou à la suspension en vue d'améliorer son pouvoir de pénétration et/ou sa résistance.

8. Procédé suivant l'une quelconque des revendications 1 à 7, caractérisé en ce que la désagrégation et/ou l'évacuation des parties de paroi de canalisation défectueuses s'effectuent à l'aide d'un jet coupant qui, en fonction de la nature du sol et de la paroi de la canalisation, est à une pression de pompage de 5 à 1000 bars, de préférence de 25 à 800 bars, en particulier de 100 à 500 bars.

9. Procédé suivant l'une quelconque des revendications 1 à 8, caractérisé en ce qu'à titre de chemise intérieure, on utilise une chemise d'acier, de préférence une chemise d'acier démontable.

10. Procédé suivant l'une quelconque des revendications 1 à 9, caractérisé en ce que la chemise est déplacée sur des plaques de fond préfabriquées.

11. Procédé suivant l'une quelconque des revendications 1 à 10, caractérisé en ce que, au fur et à mesure de l'assemblage de la chemise, des éléments de revêtement pour la nouvelle canalisation sont disposés autour de la chemise.

12. Procédé suivant l'une quelconque des revendications 1 à 9, caractérisé en ce que des rangées de presses hydrauliques sont disposées le long des joints des segments de chemise introduits dans la canalisation de telle sorte que, par l'actionnement de ces presses, la chemise soit élargie, soit pressée contre la paroi de la canalisation et désagrège et/ou détruise la structure de cette paroi de canalisation.

**Claims**

1. A process for the rehabilitation of damaged, accessible, slippable and non-slippable sewers of any cross-sectional shape, characterized in that an impermeable inner shell, which is known per se, is introduced into the damaged sewer, and the damaged sections of sewer wall are loosened and/or removed from the outside with the help of a cutting jet of water or suspension, with or without added air, put down via a drill hole, and the resulting or pre-existing spaces are filled and stabilized with mortar and/or suspension.

2. A process as in claim 1, characterized in that the filling of the resulting or pre-existing space is carried out with hydraulically hardening mortar, preferably with mortar based on a Portland cement, iron Portland cement, Portland blast furnace cement, in particular a cement with increased resistance to sulfate, or a hydraulically hardening lime.

3. A process as in claim 1, characterized in that the filling of the resulting or pre-existing space is effected with quick-hardening cement based on $11CaO.7 Al_2O_3.CaF_2$ or high alumina cement.

4. A process as in claim 1, characterized in that the filling of the resulting or pre-existing space is effected with a thermoplastic, elastomer or thermosetting organic bonding agent.

5. A process as in one of the claims 1 to 3, characterized in that the mortar or the suspension contains an additive that matches the hardening time of the cement to the particular conditions.

6. A process as in one of the claims 1 to 3, or 5, characterized in that the mortar and/or suspension used to fill the resulting or pre-existing space contains a liquefying agent, a thinner, a porosity agent, and/or a stabilizer.

7. A process as in one of the claims 1 to 3 or 6, characterized in that a plastic additive, preferably based on acrylate and/or styrol butadiene, is added to the hydraulically hardened mortar or suspension to improve its penetration performance and/or durability.

8. A process as in one of the claims 1 to 7, characterized in that the loosening and/or removal of the damaged sections of sewer wall is carried out with the help of a cutter jet, at a pump pressure of 5 to 1.000 bar, preferably 25 to 800 bar, and in particular 100 to 500 bar, depending on the characteristics of the ground and the sewer walls.

9. A process as in one of the claims 1 to 8, characterized in that a steel shell, preferably a dismantleable steel shell, is used as the inside shell.

10. A process as in one of the claims 1 to 9, characterized in that the shell is installed on prefabricated base shells.

11. A process as in one of the claims 1 to 10, characterized in that section by section as the shell is assembled, lining elements for the new sewer are installed around the shell.

12. A process as in one of the claims 1 to 9, characterized in that rows of hydraulic presses can be arranged along the joints between the segments of the shell that is introduced into the sewer, such that when said presses are operated the shell is expanded, pressed against the wall of the sewer, and the joints in the sewer wall are opened up and/or destroyed.